**Europäisches Patentamt**

**European Patent Office**

**Office européen des brevets**

(11) Publication number : **0 512 766 A1**

(19)

(12) # EUROPEAN PATENT APPLICATION

(21) Application number : **92303967.1**

(22) Date of filing : **01.05.92**

(51) Int. Cl.$^5$ : **C10G 35/09, B01J 23/62**

(30) Priority : **06.05.91 US 695674**

(43) Date of publication of application :
**11.11.92 Bulletin 92/46**

(84) Designated Contracting States :
**BE DE FR GB IT NL**

(71) Applicant : **EXXON RESEARCH AND ENGINEERING COMPANY**
**P.O.Box 390, 180 Park Avenue**
**Florham Park, New Jersey 07932 (US)**

(72) Inventor : **Baird, William Chalmers, Jr.**
**5905 Bennington Avenue**
**Baton Rouge, Louisiana 70808 (US)**
Inventor : **Swan, George Alexander, III**
**18437 Wildlife Way Drive**
**Baton Rouge, Louisiana 70817 (US)**

(74) Representative : **Somers, Harold Arnold et al**
**ESSO Engineering (Europe) Ltd. Patents & Licences Mailpoint 72 Esso House Ermyn Way**
**Leatherhead, Surrey KT22 8XE (GB)**

(54) **A process for low pressure semi-regenerative reforming of naphtha.**

(57)    Disclosed is a process for reforming a gasoline boiling range naphtha feed under low pressure semi-regenerative conditions by contacting the feed with a supported platinum-iridium-tin catalyst. The tin is substantially homogenously dispersed throughout the support. Enhanced yield-stability is realised.

FIG. 1

EP 0 512 766 A1

## FIELD OF THE INVENTION

This invention relates to a process for catalytically reforming naphthas, and straight run gasoline feeds in the presence of a high metals content platinum - iridium - tin catalyst. The reforming is conducted at relatively low pressures in a semi regenerative mode.

## BACKGROUND OF THE INVENTION

Catalytic reforming, or hydroforming, is a well established industrial process employed by the petroleum industry for improving the octane quality of naphthas and straight run gasolines. In fact, it is the primary source of octane, i.e., components of high octane rating, in the modern refinery. Reforming can be defined as the total effect of the molecular changes, or hydrocarbon reactions, produced by dehydrogenation of cyclohexanes and dehydroisomerization of alkylcyclopentanes to yield aromatics; isomerization of n-paraffins; isomerization of alkylcycloparaffins to yield cyclohexanes; isomerization of substituted aromatics; and hydrocracking of paraffins which produces gas, and inevitably coke, the latter being deposited on the catalyst. In catalytic reforming, a multi-functional catalyst is employed which contains a metal hydrogenation-dehydrogenation (hydrogen transfer) component, or components, usually platinum, substantially atomically dispersed upon the surface of a porous, inorganic oxide support, such as alumina. Other porous, inorganic oxide supports include bentonite, clay diatomaceous earth, zeolite, silica, activated carbon, magnesia, zirconia and thoria. Alumina supports may be prepared according to the guidelines provided in U.S. 4,966,880, herein incorporated by reference. The alumina support, which usually contains a halide, particularly chloride, provides the acid functionality needed for isomerization, cyclization, and hydrocracking reactions.

Buss et al (U.S. 3,718,578) discloses and claims a reforming process utilizing a supported platinum-iridium-tin catalyst. Although the components platinum, tin and iridium may be included with the porous solid carrier by any suitable technique, such as ion exchange or coprecipitation, impregnation is the preferred approach. Impregnation techniques are disclosed generally in columns 3 and 4 of Buss et al. There is no disclosure in Buss et al concerning the order of impregnation, or suggesting that the support be first impregnated with tin, followed by extrusion, followed by impregnation with platinum and iridium.

Buss et al indicates (col .4, lines 52-56) that a comminuted alumina may be impregnated with a solution of metal compounds (i.e., tin, platinum and iridium) prior to or during pasting or extrusion of the alumina to form solid particles. Buss et al does not, in either its description or examples, indicate that the stage of catalyst preparation at which impregnation occurs might be critical.

Commercial reforming operations are typically performed in either continuous or fixed-bed reactors. Fixed-bed reactors are usually employed in semi regenerative and cyclic reforming and moving-bed reactors in continuous reforming. High severity cyclic reforming provides relatively high yields of high octane reformate, but investment and operating costs are generally high because of the brief on-oil cycles and the need for frequent regeneration. On the other hand, semi regenerative reforming units operate at relatively mild severity, with high hydrogen recycle rates and operating pressures to produce acceptable yields of a product which is at an acceptable octane level. Further, investment costs are substantially less for semi regenerative units, but regeneration of the catalyst requires the unit to be taken off-stream. Depending upon severity of operation, regeneration is typically required at intervals of 3 to 24 months. Consequently, semi regenerative reforming often affords economic advantages over cyclic reforming.

Most existing semi regenerative units operate at pressures exceeding about $2.1 \times 10^5$ kg/m$^2$, frequently at pressures to $4.2 \times 10^5$ kg/M$^2$ with recycle gas rates of about 85 to 170 m$^3$. While the hydrogen partial pressures prevailing at these operating pressures favor catalyst stability through the attenuation of coke deposition, $C_5$+ liquid yield and octane are suppressed. This is because relatively high hydrogen partial pressures resist the formation of aromatics while favoring undesirable hydrocracking of feed hydrocarbons over the catalyst platinum. While the reduction of operating pressure is of an obvious benefit to aromatic production and overall liquid yields, the lack of catalysts able to resist premature deactivation at lower hydrogen pressures has frustrated this approach. This situation is further aggravated by the desire to couple low pressure with low gas recycle rate. In general, excessively high recycle rates are discouraged by compressor piping and valving limitations. These low pressures and low gas recycle rates create excessive deactivating conditions since the hydrogen partial pressure is decreasing and the oil partial pressure is increasing. The need to decrease recycle gas rate with decreasing pressure is acute with existing semi regenerative units. Greater flexibility exists for grass roots units with the selection of recycle rate being largely determined by economic factors. In general, excessively high recycle rates are discouraged by compressor, piping, and valving limitations. A class of trimetallic catalysts comprised of platinum, rhenium and iridium has been previously demonstrated to possess high activity and stability at such conditions, as described in U.S. 4,719,005. The benefits obtained with bimetallic catalysts of platinum and tin using an alumina support were disclosed in U.S. 4,966,880.

Consequently, there exists a need in the art for catalysts which can take advantage of the relatively low operating pressures and low gas recycle rates of a semi regenerative reforming unit and not suffer from premature deactivation.

## SUMMARY OF THE INVENTION

In accordance with the present invention, there is provided a process for reforming a gasoline boiling range hydrocarbonaceous feedstock in the presence of hydrogen in a semi regenerative reforming process unit comprised of a plurality of serially connected reactors wherein each of the reactors contains a catalyst comprised of about 0.1 to about 1.0 wt % platinum, about 0.1 to about 1.0 wt% iridium, and about 0.02 to about 0.4 wt% tin, wherein the tin is substantially homogeneously dispersed throughout the support and wherein the reforming is conducted at a suitable temperature (e.g., in the range of from about 470°C to about 520°C) and at a suitable pressure (e.g., from about $3.5 \times 10^4$ kg/m$^2$ to about $2.8 \times 10^5$ kg/m$^2$).

## BRIEF DESCRIPTION OF THE FIGURES

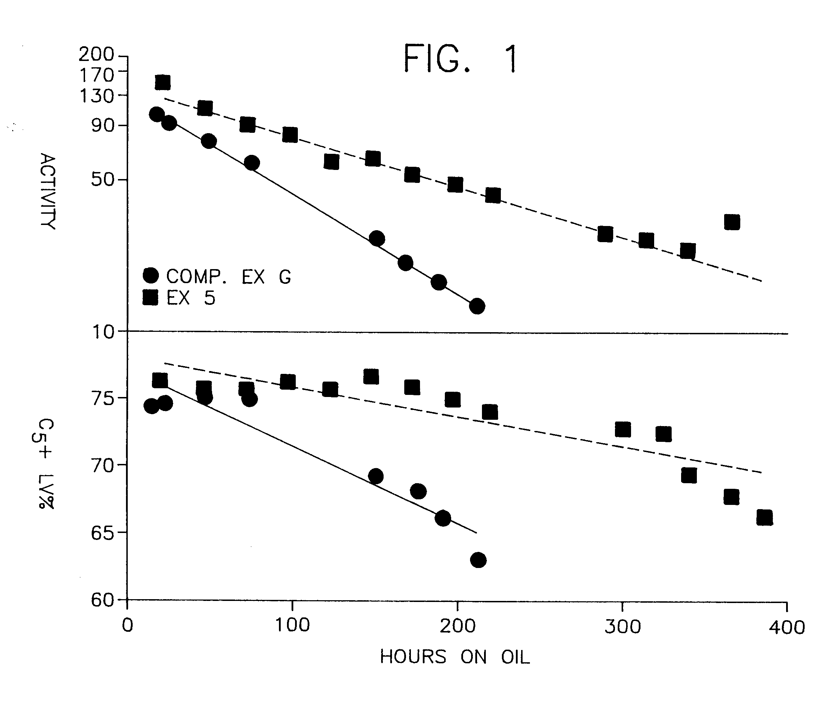

Figure 1 illustrates the performance of the platinum-rhenium catalyst of Comparative Example G and the platinum-iridium-tin catalysts of Example 5 in low pressure, low gas recycle semi regenerative reforming. The platinum-rhenium catalyst is essentially totally deactivated within 200 hours on oil. During this interval, the yield stability of the platinum-rhenium catalyst collapsed by nearly 15 LV%. In contrast, the platinum-iridium-tin catalyst of this invention maintained substantial activity and yield stability through about 400 hours thereby surpassing the performance of the platinum-rhenium catalyst by a factor of 2.

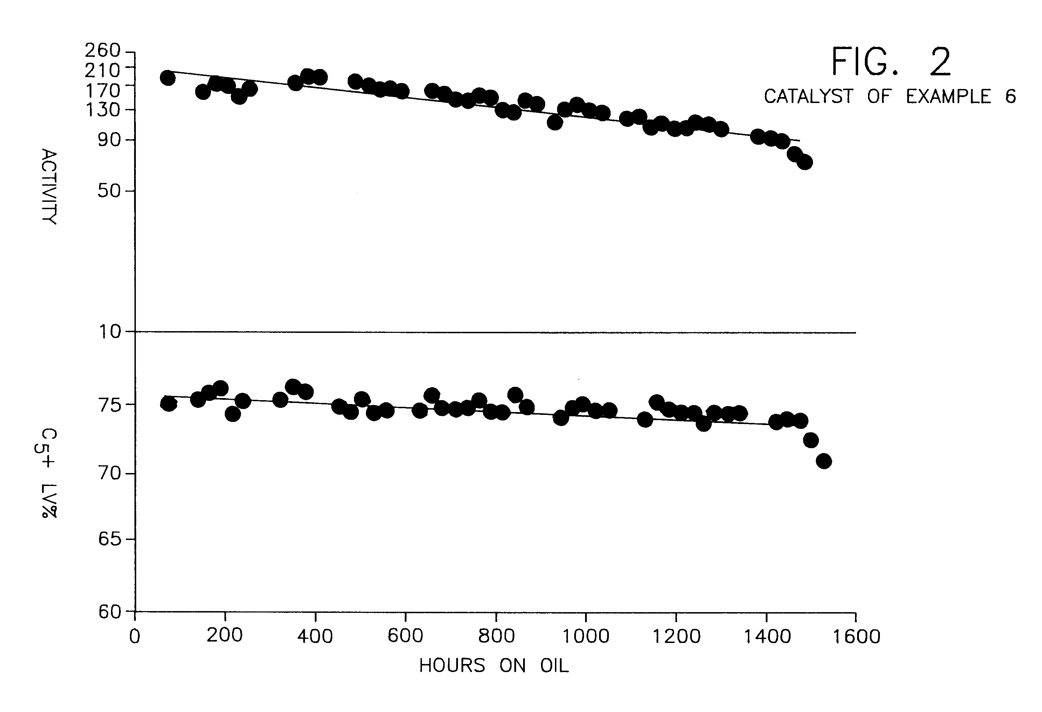

Figure 2 graphically shows the results of the semi regenerative reforming test of Example 6. The platinum-iridium-tin catalyst of this invention maintained excellent activity and yield stability for 1500 hours where the test was arbitrarily concluded even though the catalyst was producing reformate of greater than 98 octane.

## DETAILED DESCRIPTION OF THE INVENTION

The catalysts of this invention are prepared by the impregnation of platinum and iridium onto a refractory support, preferably alumina which has been modified with an effective amount of tin. The refractory support could also contain materials selected from the group consisting of: bentonite, clay, diatomaceous earth, zeolite, silica, activated carbon, magnesia, zirconia and thoria. In this invention, the platinum, iridium and tin are substantially evenly distributed throughout the catalyst. There are substantially no localized areas of maldistribution.

Aluminas suitable for tin-modification in accordance with the present invention are any of the high purity aluminas suitable for use as a support for reforming catalysts. The alumina can be synthetic or naturally occurring, although synthetic alumina is preferred because its preparation can be controlled to insure the appropriate level of purity and desired physical characteristics. It is also preferred that the alumina be one which upon calcination forms gamma alumina. By "an alumina which upon calcination forms gamma alumina" it is meant an alumina which is essentially in the trihydrate form prior to calcination, and which upon calcination is, according to the crystal pattern, gamma alumina. Principally, these aluminas are derived from precipitation methods or, preferably, the digestion of metallic aluminum by a weak organic acid.

In a preferred precipitation method, the alumina is prepared by the addition of an acid or acid salt such as hydrochloric acid or any of the alums, to an alkali metal aluminate, such as sodium or potassium aluminate.

The most preferred aluminas suitable for use herein are those prepared by digesting, or reacting, metallic aluminum with a weak organic acid to form an alumina sol. Preferred weak organic acids include acetic and formic acid. It is also preferred that the aluminum be digested in the presence of a mercury compound, such as a mercury aluminum hydroxide complex of acetic acid. Such processes are well known to those skilled in the art and are described in U.S. Pat Nos. as 2,274,634; Re 22,196 and 2,859,183. As previously mentioned, in such a process, an alpha aluminum salt is prepared by dissolving metallic aluminum in a dilute (about 1-6 wt.%) organic acid in the presence of a mercury compound. The aluminum and mercury form an amalgam which slowly dissolves with the evolution of hydrogen to alumina salt containing mercury, undissolved aluminum, and other materials. If desired, the resulting sol can be treated with a sufficient amount of ammonium hydroxide to obtain a pH of about 6.8 to 7.8, to form a gel which can be dried and calcined. It is preferred that the sol not be gelled, but that it be sprayed-dried to produce a high purity alumina hydrate powder, which can then be ground to an appropriate particle size. Although not critical for the practice of the present invention, an appropriate particle size is from about 5 to 15 microns.

3

The tin-modified aluminas of the present invention are prepared by incorporating therein an effective amount of tin. The tin is such that when used in an effective amount, and when substantially homogeneously dispersed throughout the support, contributes to the resulting reforming catalyst by providing improved overall selectivity with respect to liquid yield with simultaneous suppression of metal site cracking, when compared to a similar catalyst not containing tin homogeneously dispersed throughout. Generally, an effective amount of tin will be from about 0.02 wt.% to 0.4 wt.% tin, preferably about 0.05 to 0.3 wt.% tin, based on the total weight of the catalyst (dry basis).

The tin component can be substantially homogeneously incorporated into the alumina during any stage of alumina hydrate, alumina, or catalyst production. In a particularly preferred production scheme for producing the modified alumina of this invention, high purity alumina hydrate powder is first prepared by digesting metallic aluminum in a weak organic acid, thereby forming an alumina sol which can be mixed with a water soluble tin salt and spray-dried by a conventional spray-drying technique to produce tin-modified alumina hydrate powder. If the alumina hydrate powder is not of appropriate particle size, it can be ground by an conventional grinding means for reducing the particle size of refractory powders. The alumina hydrate powder is then blended with an effective amount of water, or sol , to form a paste of sufficient consistency forming into its desired shape. Such paste can be pulled, pelleted, beaded, sieved, or extruded. It is preferred to extrude the paste into extrudates such as pellets which are then dried and calcined at temperatures from about 400°C. to about 650°C. The active metals, platinum and iridium, can then be impregnated into the alumina extrudates by conventional impregnation means to form the reforming catalyst.

Non-limiting examples of water soluble tin salts which can be used in the practice of the present invention include stannous chloride, stannic chloride, stannic tartrate, stannic nitrate, and the like. Preferred is stannous chloride. It can also be blended with the alumina hydrate powder, which blend can then be further blended with the alumina sol to form the extrusion paste. Further, the alumina hydrate powder and alumina sol can first be blended whereupon the tin component can be added with sufficient water to form an extrudable paste. it is also understood that the tin component can be added with sufficient water to form an extrudable paste. The tin component can also be mixed with the alumina powder prior to grinding. Although the tin component can concurrently be incorporated into the alumina hydrate material after extrusion by conventional impregnation techniques, it is preferred to introduce it prior to extrusion to ensure homogeneity of the tin throughout the alumina material.

The tin-modified alumina materials of this invention are characterized as (i) having a concentration of tin component ranging from about 0.02 wt.% to about 0.4 wt.%; (ii) a surface area greater than about 175, preferably from about 180 to 200 m²/g; (iii) a bulk density from about 0.65 to 0. 75 g/ml, preferably from about 0.66 to 0.74 g/ml ; (iv) an average pore volume from about 0.4 to 0.6 ml/g, preferably from about 0.45 to 0.55 ml/g; and (v) an average pore diameter from about $9 \times 10^{-9}$m to $1.5 \times 10^{-8}$m.

The final catalysts of the present invention are prepared from the tin-aluminas by incorporating therein both platinum and iridium. The resulting catalysts will also contain an acidic function which is important for isomerization reactions and which is associated with the tin-modified alumina support material. The hydrogenation-dehydrogenation function is preferably provided by the platinum component which will be present in the catalyst in an amount from about 0.1-1.0 wt.%, calculated on an elemental basis, of the final catalyst composition. More preferably the catalyst contains from about 0.2 to about 0.7 wt.% platinum. The iridium content of the catalyst may be equal to, greater than, or less than that of platinum, but within the same concentration ranges.

The platinum and iridium can be incorporated into the tin-modified alumina by techniques such as by impregnation, either before or after it has been preformed, that is, pilled, pelleted, beaded, or extruded. If impregnation is used, the tin-modified alumina, in a dry, or solvated state, is contacted, either alone or admixed, or otherwise incorporated with a platinum and iridium containing solution. This can be either the "incipient wetness" technique, or a technique embodying absorption from a dilute or concentrated solution, with subsequent filtration or evaporation to effect the total uptake of the metallic components. The solution used in the impregnation step can be a salt or acid solution having the respective concentrations of platinum and iridium compounds dissolved therein. The amount of impregnation solution used should be sufficient to completely immerse the alumina. This is usually within the range of about 1 to 20 times the amount of alumina, by volume, depending on the platinum and iridium concentrations in the impregnation solution. The impregnation treatment can be carried out under a wide range of conditions, including ambient or elevated temperatures, and atmospheric or superatmospheric pressures. The choice of conditions is within the knowledge of those having ordinary skill in the art and thus will not be elaborated on herein.

The catalyst may also contain a halide component which contributes to the acid functionality of the catalyst. The halide may be fluoride, chloride, iodide, bromide, or mixtures thereof. Preferred are fluoride and chloride, with chloride being more preferred. Generally, the amount of halide is such that the final catalyst composition will contain from about 0.1 to about 3.5 wt.%, preferably from about 0.5 to about 1.5 wt. %, of halogen calculated on an elemental basis. The halide can be introduced into the catalyst by any method at any time of the catalyst preparation, for example, prior to, following or simultaneously with the impregnation of the platinum. In the usual operation, the halide component is introduced simultaneously with the incorporation of platinum. Halide can also be incorporated by contacting the modified alumina in a vapor phase, or liquid phase, with a halogen compound such as hydrogen fluoride, hydrogen chloride, ammonium chloride, or the like.

The catalyst, after impregnation, is dried by heating at a temperature above about 27°C, preferably between about 65°C and 150°C, in the presence of nitrogen or oxygen, or both, in an air stream or under vacuum. It can then be calcined at a temperature from about 200°C to 450°C, preferably from about 300°C and 400°C, in the presence of nitrogen or oxygen in an air stream, or in the presence of a mixture of oxygen and an inert gas. This calcination or activation is conducted for periods ranging from about 1 to about 24 hours in either flowing or static gases. The catalyst must then be reduced. The reduction step is performed by contact with flowing hydrogen at temperatures ranging from about 175°C to about 560°C for periods ranging from about 0.5 to about 24 hours at about 10.33-41.33 kg/m². The catalyst may be sulfided by use of a blend of $H_2S/H_2$ and performed at temperature ranging from about 175°C to about 560°C at about 10.33-41.33 kg/m² for a time necessary to achieve breakthrough, or until the desired sulfur level is reached. Post-sulfiding stripping can be employed, if desired, at conditions similar to those for reduction of the catalyst.

The feed, or chargestock may be a hydrocarbonaceous stream boiling in the gasoline range of about 27° to 220°C. Nonlimiting examples of such feeds include those derived from both petroleum and synthetic sources such as virgin naphtha, cracked naphtha, a Fischer-Tropsch naphtha, coal derived naphtha, or the like. Typical feeds are those hydrocarbons containing from about 5 to 12 carbon atoms, or more preferably from about 5 to about 9 carbon atoms. Naphthas, or petroleum fractions boiling within the range of from about 27°C to 220°C, and preferably from about 50°C and 190°C, contain hydrocarbons of carbon numbers within these ranges. Typical fractions thus usually contain from about 20 to about 80 vol.% paraffins, both normal and branched, which fall in the range of about $C_5$ to $C_{12}$; from about 10 to 80 vol. % of naphthenes falling within the range of from about $C_6$ to $C_{12}$; and from about 5 through 20 vol. % of the desirable aromatics falling within the range of from about $C_6$ to $C_{12}$.

The reforming runs are initiated by adjusting the hydrogen and feed rates, and the temperature and pressure, to operating conditions. The runs are continued at optimum reforming conditions by adjustment of the major process variables, e.g., within any of the ranges described below:

| Major Operating Variables | Typical Process Conditions | Preferred Process Conditions |
|---|---|---|
| Pressure, kg/m² | $1.75 \times 10^4 - 1.4 \times 10^5$ | $3.5 \times 10^4 - 1.05 \times 10^5$ |
| Reactor Temp., °C | 400-600 | 465-540 |
| Gas Rate, Cubic Meters per Barrel (m³/B) (Incl. Recycle Gas) | 43-142 | 56-102 |
| Feed Rate, Weight Feed/ Hr/Weight Catalyst (W/Hr/W) | 0.5-10 | 1-3 |

The most preferred pressure is from about $5.25 \times 10^4$ to $8.75 \times 10^4$ kg/m². The instant invention is illustrated further by the following examples which, however, are not to be taken as limiting in any respect. All parts and percentages, unless expressly stated otherwise, are by weight.

## EXAMPLES

Five examples of catalyst preparation appear below. In Examples 1 and Comparative Example D, the catalysts were prepared in accordance with techniques of the instant application, wherein platinum and iridium were impregnated onto a tin-containing alumina extrudate. While the method of the present invention was used to prepare the catalyst of Comparative Example D, the metal concentration was outside the range of those of the present invention. The catalysts of Comparative Examples A-C were prepared according to U.S. Patent 3,718,578. The catalyst prepared according to each example was then examined by electron probe microscopy in order to determine the degree of metals distribution throughout the catalyst extrudate. Electron probe microscopy is a common analytical technique used to assess whether or not the method of catalyst synthesis employed has achieved a uniform distribution of all metals. One or more metals of such a catalyst might be maldistributed and localized either in the extrudate core or at its outermost extremities, or edges. Localization at the edges is the most frequently encountered type of maldistribution and is generally conceded to adversely affect catalyst performance, since regions of the catalyst particle are essentially free of the maldistributed components.

**Example 1:**

A trimetallic catalyst of the instant invention was prepared by impregnating platinum and iridium onto a support composed of a tin containing alumina (0.3 wt.% tin) which was prepared by the addition of stannic chloride to an alumina mull mix prior to extrusion. After extrusion the extrudates were dried and shown by analysis to contain 0.6 wt% of each of platinum and iridium and 0.3 wt.% tin. Examination of the catalysts of this example by electron probe microscopy showed that the platinum, iridium and tin were uniformly distributed.

**Comparative Example A:**

The catalyst was prepared in accordance with the teaching of U.S. 3,718,578 by following the general procedures outlined in columns 3 and 4 of that patent. Platinum, iridium and tin were simultaneously impregnated onto alumina extrudates (tin free) to give a composition of 0.3 wt.% platinum, 0.3 wt.% tin and 0.05 wt.% iridium. Examination by election probe microscopy revealed an acceptable distribution of platinum and iridium. All of the tin, however, was shown to be present at the outer edges of the extrudate and was essentially absent from the interior.

**Comparative Example B:**

Platinum and iridium were simultaneously impregnated onto the alumina extrudates using a procedure of U.S. 3,718,578. Tin was subsequently impregnated onto the platinum/iridium-containing support. The composition of the catalyst was identical to that of Example A. As in Example A, platinum and iridium were properly distributed while the tin again was located at the outer edges of the extrudate.

**Comparative Example C:**

A 0.3 wt% platinum, 0.3 wt.% tin and a 0.05 wt.% iridium catalyst was prepared by first impregnating alumina extrudates with tin, then impregnating platinum and iridium. This catalyst also exhibited proper distribution of platinum and iridium, but tin was severely maldistributed to the outermost edges.

**Comparative Example D:**

A 0.3 wt.% platinum, 0.3 wt.% tin and 0.05 wt.% iridium catalyst was prepared by impregnating platinum and iridium onto the same 0.3 wt.% tin containing alumina used in Example 1. Examination of this catalyst showed all three metals to be homogeneously distributed as in Example 1.

It is to be noted that the procedures of U.S. Patent No. 3,718,578 (Comparative Examples A-C) invariably yielded catalysts with severe maldistribution of tin.

The catalysts of the above Examples were calcined in flowing air at 500°C, reduced in flowing hydrogen, and sulfided according to the general procedures of U.S. 3,718,578 as set forth in col. 5, lines 52-68 and col. 6, lines 1-4. The catalysts were then evaluated in heptane reforming, under conditions (set forth below) permitting catalyst comparison at nominally the same level of conversion so that intrinsic differences in activity and selectivity would be apparent. The results are illustrated in Table 1, below.

## Table 1

### Heptane, 500°C, 7.03 x 10⁴ kg/m², 10-20 W/H/W, H₂/Oil = 6

$$\text{Heptane, } 500°C, 7.03 \times 10^4 \text{ kg/m}^2, 10\text{-}20 \text{ W/H/W, } H_2/Oil = 6$$

| Example | 1 | Comparative | | | |
|---|---|---|---|---|---|
| | | A | B | C | D |
| Catalyst | 0.6Pt 0.6Ir-0.3Sn | ----------0.3Pt-0.3Sn-0.05Ir--------- | | | |
| **Yield, Wt.% on Feed** | | | | | |
| $C_1$-$C_3$ | 1.6 | 1.4 | 1.4 | 1.2 | 1.0 |
| i-$C_4$ | 2.7 | 3.0 | 2.9 | 3.1 | 4.1 |
| n-$C_4$ | 5.7 | 4.9 | 4.9 | 4.2 | 4.0 |
| $C_5$+ | 80.2 | 82.2 | 82.2 | 83.7 | 82.1 |
| Toluene | 28.0 | 28.5 | 29.3 | 27.5 | 25.1 |
| Heptane Conversion | 64.8 | 62.8 | 63.7 | 59.6 | 58.3 |
| Activity | 5.7 | 2.9 | 3.0 | 2.8 | 2.6 |
| Toluene Selectivity | 43.2 | 45.3 | 46.0 | 46.0 | 43.1 |

The data of Table 1 show the catalyst of Example 1 to be twice as active as the catalysts of Comparative Examples A-D at the same conversion level . It must be noted that the weight percent of iridium used in Comparative Example D falls out of the range disclosed by the applicant as effective in his invention. Therefore, the metal loadings are as critical to the instant invention as is the homogeneous dispersion of tin throughout the support.

The higher activity of the catalyst of Example 1 is not obtained at the expense of selectivity because the $C_5$+ and toluene yields are near parity in Example 1 and in the other examples. Methane and n-butane yields for the catalysts of Comparative Examples A-C exceed those for the catalyst of Comparative Example D as a consequence of the maldistribution of tin. Comparative Examples A-C fail to moderate cracking as effectively as the properly distributed catalyst of Comparative Example D. Example 1 indicates that the methane and butane yields remain controlled despite a substantial increase in the platinum and iridium levels at a constant level of tin.

### Comparative Example E:

A conventional platinum-tin catalyst containing 0.3 wt.% platinum and 0.3 wt% tin on an alumina support, was calcined in air at 500°C for 3 hours and reduced at 500°C for 17 hours. This catalyst, in which the tin is not homogeneously dispersed, was tested in low pressure, low recycle semi regenerative reforming as set forth in Table 2 below.

### Comparative Example F:

A 0.3 wt.% platinum-0.7 wt.% rhenium-0.3 wt.% tin catalyst was prepared by impregnating a 0.3 wt% tin alumina base with platinum and rhenium. This catalyst was calcined at 500°C for 3 hours, reduced at 500°C for 17 hours and sulfided at 500°C. The resulting catalyst was tested in low pressure, low recycle semi regenerative reforming and the results are also shown in Table 2 below.

### Example 2:

Another catalyst of this invention, was prepared by impregnating another conventional tin containing alumina with 0.6 wt.% platinum and 0.6 wt.% iridium. The catalyst was calcined at 400°C for 3 hours and reduced at 500°C for 17 hours. This catalyst was not sulfided. The catalyst composition was 0.6 wt.% platinum, 0.6 wt.% iridium, and 0.3 to 0.4 wt.% tin. This was also tested in low pressure, low recycle semi regenerative reforming with results being set forth in Table 2 below.

### Example 3:

Another catalyst was prepared by impregnating a conventional 0.3 wt% tin-alumina support with platinum and iridium as in Example 2. This catalyst was pretreated in the same manner as in Example 2 except that the catalyst was sulfided at 500°C. The resulting catalyst contained 0.6 wt.% platinum-0.6 wt.% iridium-0.3 wt.% tin and was also tested in low pressure, low recycle semi regenerative reforming. The results are shown in Table 2 below.

### Example 4:

A catalyst was prepared and treated as in Example 2 except the platinum and iridium loadings were changed to 0.3 wt.% platinum and 0.6 wt.% iridium. The catalyst was tested in low pressure, low recycle semi regenerative reforming and the results shown in Table 2 below.

The catalysts shown in Table 2 were used to reform a substantially sulfur free, paraffinic naphtha at 510°C Equivalent Isothermal Temperature (EIT), $3.5 \times 10^4$ kg/m2, 62-85m3/B, 1.9W/H/W. These process conditions are extremely severe and are intended to discriminate among catalysts for their ability to maintain activity at low pressure, low recycle semi regenerative conditions. The catalysts of this invention, Examples 2-4, are 3-6 times more active than the conventional platinum-tin and platinum-rhenium-tin catalysts, (Comparative Examples E and F), with relative in-cycle yield credits amounting to 1.02-1.08 times base platinum tin due to significantly improved stability. These results teach that the catalysts of this invention are capable of sustained reforming activity at low pressure, low recycle conditions and as such are ideally suited to such semi regenerative reforming applications.

### TABLE 2

#### Reforming Light Arab Paraffinic Naphtha
#### At Low Pressure, Low Recycle
#### 510°C EIT, 3.5 x 10⁴ kg/m², 62-85 m³/B, 1.9 W/H/W

| Example | Relative Activity | Relative Yield |
|---|---|---|
| Comp. Ex. E | 1.00 | Base |
| Comp. Ex. F | 1.11 | Base + 2 LV%[a] |
| 2 | 2.89 | Base + 8 LV% |
| 3 | 6.00 | Base + 8 LV% |
| 4 | 2.97 | Base + 5 LV% |

[a] LV% = liquid volume percent

### Comparative Example G:

A conventional 0.3 wt.% platinum-0.3 wt.% rhenium reforming catalyst was calcined at 500°C for 3 hours, reduced at 500°C for 17 hours, and sulfided at 500°C. The catalyst was used to reform a substantially sulfur free paraffinic naphtha at low pressure, low recycle semi regenerative conditions. This catalyst is a typical commercial catalyst presently used for semi regenerative reforming.

### Example 5:

A 0.6 wt.% platinum-0.6 wt.% iridium-0.3 wt.% tin catalyst was prepared as in Example 3 hereof. The catalyst was also calcined, reduced, and sulfided as in Example 3. The catalyst was used in a comparative reforming test with the commercial platinum-rhenium catalyst of Comparative Example G.

Figure 1 illustrates the performance of the platinum-rhenium catalyst of Comparative Example G and the platinum-iridium-tin catalyst of Example 5 in low pressure, low recycle semi regenerative reforming. Reforming conditions were a temperature from about 480° to 540°C; $7.03 \times 10^4$ kg/m²; 62 m³/B; and 1.9 W/H/W. The platinum-rhenium catalyst is essentially totally deactivated within 200 hours on oil. During this interval, the $C_5+$ liquid yield stability of the platinum-rhenium catalyst collapsed by nearly 15 LV%. In contrast, the platinum-iridium-tin catalyst of this invention maintained substantial activity and yield stability through about 400 hours thereby surpassing the performance of the platinum-rhenium catalyst by a factor of 2.

## Example 6:

A 0.6 wt.% platinum-0.6 wt.% iridium-0.3 wt.% tin catalyst was prepared as in Example 3 hereof. This catalyst was calcined and reduced also as in Example 3, but it was not sulfided. The catalyst was tested in low pressure, low recycle semi regenerative reforming of a substantially sulfur free paraffinic naphtha. Reforming conditions were: about 450° to 540°C; $7.03 \times 10^4$ kg/m²; 85 m³/B; and 1.9 W/H/W.

The results of this semi regenerative reforming test are plotted in Figure 2. The platinum-iridium-tin catalyst of this example maintained excellent activity and yield stability for 1500 hours where the test was arbitrarily concluded even though the catalyst was producing reformate of greater than 98 octane.

## Claims

1. A process for catalytically reforming a gasoline boiling-range hydrocarbonaceous feedstream, in a semi-regenerative mode, in the presence of hydrogen, at a pressure range from about $1.75 \times 10^4$ to about $1.4 \times 10^5$ kg/m² and a gas rate ranging from about 43 to about 142 standard cubic meters/barrel, comprising contacting said feed stream with a catalyst composition comprised of from 0.1 to 1.0 wt.% platinum, from 0.1 to 1.0 wt.% iridium and from 0.02 to 0.4 wt.% tin, on an inorganic oxide support, wherein the tin is substantially homogeneously dispersed throughout the support.

2. The process of claim 1 wherein said support is alumina.

3. The process of claim 1 or claim 2 wherein the pressure range is from about $3.5 \times 10^4$ to about $1.05 \times 10^5$ kg/m².

4. The process of any one of claims 1 to 3 wherein said catalyst contains from about 0.2 to 0.7 wt.% platinum, from 0.2 to 0.7 wt.% iridium and from 0.05 to 0.3 wt.% tin.

5. The process of any one of claims 1 to 4 wherein the catalyst is prepared by impregnating the platinum and iridium components onto an alumina support which already contains the tin which is substantially homogeneously dispersed therein.

6. The process of claim 5 wherein said support is prepared by the addition of a water-soluble tin salt to an alumina mull mix prior to extrusion.

7. The process of claim 6 wherein the tin salt is selected from the group consisting of stannous chloride, stannic chloride, stannic tartrate, and stannic nitrate.

8. The process of claim 7 wherein the tin salt is stannous chloride.

FIG. 1

FIG. 2

CATALYST OF EXAMPLE 6

**European Patent Office**

# EUROPEAN SEARCH REPORT

Application Number

EP 92 30 3967

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 677 094 (UOP)<br>* column 6, line 32 - column 7, line 53; claims 1-10 *<br>* column 12, line 8 - column 13, line 29 *<br>--- | 1-8 | C10G35/09<br>B01J23/62 |
| A | US-A-4 003 852 (UOP)<br>* column 7, line 42 - column 8, line 33; claims 1-7 *<br>--- | 1-8 | |
| D,A | FR-A-2 076 937 (CHEVRON)<br>* the whole document *<br>--- | 1-8 | |
| A | US-A-3 886 061 (CIE FRANCAISE DE RAFFINAGE)<br>--- | | |
| A | US-A-3 926 849 (UOP)<br>--- | | |
| A | US-A-3 943 071 (UOP)<br><br>----- | | |
| | | | TECHNICAL FIELDS SEARCHED (Int. Cl.5 )<br><br>B01J<br>C10G |

The present search report has been drawn up for all claims

| Place of search | Date of completion of the search | Examiner |
|---|---|---|
| THE HAGUE | 20 JULY 1992 | MICHIELS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P0401)